# EUROPEAN PATENT APPLICATION

(11) **EP 1 612 230 A1**
(43) Date of publication of application: **04.01.2006**
(21) Application number: 04724148.4
(22) Date of filing: 29.03.2004
(51) Int. Cl.: C08G 63/08, C08G 63/90

(54) **LACTONE POLYESTER POLYOLS AND PROCESS FOR PRODUCTION THEREOF**

(30) Priority: 31.03.2003 JP 2003096154
(71) Applicant: DAICEL CHEMICAL INDUSTRIES, LTD., Sakai-shi, Osaka 590-0905 (JP)
(72) Inventor: ENDO, Toshio, Otake-shi, Hiroshima 739-0651 (JP); NAKAMOTO, Masanobu, Iwakuni-shi, Yamaguchi 741-0061 (JP)
(74) Representative: Grünecker, Kinkeldey, Stockmair & Schwanhäusser Anwaltssozietät
(86) International application number: PCT/JP2004/004436
(87) International publication number: WO 2004/087783

(57) **Abstract**

An object of the present invention is to provide a lactone-based polyester polyol containing a low-molecular-weight compound in a small amount and to provide a high-quality polyurethane resin.

The present invention provides a lactone-based polyester polyol having a cyclic lactone content of 0.05% by weight or less, and provides a process for producing a lactone-based polyester polyol, wherein the process comprises a first step of adding a cyclic lactone, a low-molecular-weight polyol and/or a polycarboxylic acid, and an esterification catalyst to a reaction system and making ring-opening addition or esterification of the cyclic lactone to proceed until conversion of the cyclic lactone reaches a predetermined level; and a second step of continuously feeding the reaction mixture to a thin-film evaporator and subjecting the reaction mixture to evaporation in the form of thin film, thereby removing a low-molecular-weight compound from the system.

## Description

### TECHNICAL FIELD

The present invention relates to a lactone-based polyester polyol purified so as to serve as a raw material for producing a polyurethane resin, and to a process for producing the same. More particularly, the invention relates to a lactone-based polyester polyol containing a low-molecular-weight compound in a small amount; to a lactone-based polyester polyol produced through performing ring-opening addition or esterification of a cyclic lactone until conversion of the cyclic lactone reaches a predetermined level and, subsequently, removing the low-molecular-weight compound having remained or having been formed; and to a process for producing the same.

Incidentally, lactone-based polyester polyols produced through any of the below-mentioned conventional production methods have been employed as, for example, a raw material for a polyurethane resin, while these polyols contain considerably large amount of low-molecular-weight compounds; e.g., remaining unreacted cyclic lactones, cyclic lactone dimers formed, and malodorous substances formed.

### BACKGROUND ART

A lactone-based polyester polyol, serving as a polyol component for producing a polyurethane resin, is produced from a cyclic lactone through a method which includes performing ring-opening addition reaction and/or esterification accompanied by addition reaction of the cyclic lactone in the presence of a variety of catalysts and a low-molecular-weight polyol and/or a polycarboxylic acid under heating at 100 to 280°C until a predetermined acid value and/or hydroxyl value (molecular weight) of the reaction products attained, followed by transesterification in accordance with needs. Examples of catalysts to be typically employed include an inorganic acid (JP 35-497 B), an alkali metal compound (JP 40-26557 B, USP 3,021,314), an alkaline earth metal compound (USPs 3,021,310 and 3,021,311), a titanium compound and a tin compound (JPs 41-19559 B and 64-1491 B), an aluminum compound (JP 43-2473 B), an organotin compound having a hydroxyl group, an alkoxide group, or a halogen (JP 6-192410 A), a complex catalyst composed of a metallic compound and a ligand (JP 6-248060 A), and a metallic compound having a halogen or an organic acid residue (JP 6-345858 A).

When the aforementioned conventional production methods are employed, low-molecular-weight compounds which are by-produced through transesterification or similar reaction remain in the produced lactone-based polyester polyols. Such the low-molecular-weight compounds include, for example, an unreacted cyclic lactone; a cyclic lactone dimer formed through dimerization of the cyclic lactone; various malodorous aldehyde species which have been produced from side reaction at high temperature and which are practically difficult to identify through analysis; and various carboxylic acid species. Among them, the cyclic lactone dimer may change to a sublimating crystalline compound and has poor reactivity. Thus, the dimer is known to cause bleeding out such as blooming when the dimer remains in a polyurethane resin.

When remaining in the lactone-based polyester polyol, a malodorous compound not only impairs the environment in which a polyurethane resin is synthesized from the lactone-based polyester polyol, but also may deteriorate the appearance of the polyurethane resin final products in terms of color hue.

In the art, in order to reduce the amount of a cyclic lactone dimer or a similar substance which causes bleeding out such as blooming of polyurethane resin or similar resins, lactone-based polyester polyols have conventionally been produced while reaction conditions are modified. However, satisfactory results have not yet been obtained.

### DISCLOSURE OF THE INVENTION

The present invention has been made to solve the aforementioned problems, and an object of the present invention is to provide a lactone-based polyester polyol from which a low-molecular-weight compound has been removed. Another object of the invention is to provide a process for producing the lactone-based polyester polyol. As compared with a conventional lactone-based polyester polyol having the same formulation and the similar number average molecular weight, the "lactone-based polyester polyol" of the present invention contains smaller amounts of low-molecular-weight compounds. As used herein, the term "low-molecular-weight compound" refers to an unreacted cyclic lactone, a cyclic lactone dimer, (by) products having a low-molecular-weight which are difficult to identify and which is a malodorant, or a similar species.

Accordingly, a first invention provides a lactone-based polyester polyol characterized by having a cyclic lactone content of 0.05% by weight or less.

A second invention is drawn to a specific embodiment of the lactone-based polyester polyol of the first invention, which has a cyclic lactone dimer content of 0.05% by weight or less.

A third invention is drawn to a specific embodiment of the lactone-based polyester polyol of the first invention, which has a cyclic lactone dimer content of 0.01% by weight or less.

A fourth invention provides a process for producing a lactone-based polyester polyol as recited in any of the first to third inventions, characterized in that the process comprises a first step of adding a cyclic lactone, a low-molecular-weight polyol and/or a polycarboxylic acid, and an esterification catalyst to a reaction system and making ring-opening addition or esterification of the cyclic lactone to proceed until conversion of the cyclic lactone reaches a predetermined level; and a second step of continuously feeding the reaction mixture to a thin-film evaporator and subjecting the reaction mixture to evaporation in the form of thin film, thereby removing a low-molecular-weight compound from the system.

A fifth invention is drawn to a specific embodiment of the process for producing a lactone-based polyester polyol of the fourth invention, wherein the low-molecular-weight compound mainly comprises a cyclic lactone, a dimer of the cyclic lactone, or a malodorous substance.

### BEST MODES FOR CARRYING OUT THE INVENTION

Raw materials to be employed in the first step according to the present invention will next be described.

Examples of the cyclic lactone to be employed in the first step of the present invention include ε-caprolactone, γ-butyrolactone, and δ-valerolactone. These lactones may be used singly or in combination of two or more species. The low-molecular-weight polyol to be employed in the first step of the present invention has a molecular weight of several dozens to several hundreds and has at least two hydroxyl groups in the molecule thereof. Concrete examples of the polyol include low-molecular-weight compounds such as ethylene glycol, diethylene glycol, 1, 2 -propylene glycol, 1,3-propylene glycol, dipropylene glycol, 1, 2 -butanediol, 1,3-butanediol, 1,4-butanediol, 1,5-pentanediol, 2-methyl-1,3-propanediol, 2-methyl-1,4-butanediol, 1,6-hexanediol, 3-methyl-1,5-pentanediol, 1,9-nonanediol, 1,10-decanediol, neopentyl glycol, 2-ethyl-2-n-butyl-1,3-propanediol, 2-ethyl-2-hexyl-1,3-propanediol, cyclohexanedimethanol, glycerin, trimethylolpropane, 1,2,6-hexanetriol, diglycerin, and pentaerythritol, and oligomers such as bisphenol A alkylene oxide adducts. These polyols may be used singly or in combination of two or more species.

In combination with the low-molecular-weight polyol, there may be used one or more species selected from among diamines such as hexamethylenediamine, xylenediamine, isophoronediamine, and aminoalcohols such as monoethanolamine. Alternatively, the compound having at least two hydroxyl groups in the molecule thereof and water (including water contained in starting material) may be used in combination.

Examples of the polycarboxylic acid which can be employed in the first step of the present invention include carboxylic acids such as succinic acid, adipic acid, sebacic acid, azelaic acid, terephthalic acid, isophthalic acid, orthophthalic acid, hexahydroterephthalic acid, hexahydroisophthalic acid, hexahydro-orthophthalic acid, naphthalenedicarboxylic acid, trimellitic acid, and trimellitic anhydride. These acids may be used as esters or anhydrides thereof. These acid species maybe used singly or in combination of two or more species.

Examples of the catalyst for esterification to be employed in the present invention include titanium compounds such as tetrapropyl titanate, tetrabutyl titanate, and tetrastearyl titanate; tin compounds such as stannous octylate, dibutyltin dilaurate, stannous chloride, stannous bromide, stannous iodide, dibutyltin dichloride, butyltin trichloride, and dibutyltin oxide; alkylbenzenesulfonic acid metal salts such as sodium p-toluenesulfonate; alkylsulfonic acids such as methanesulfonic acid; cobalt hydroxide, manganese acetate, zinc oxide, and cobalt octylate. In the present invention, a tin compound is preferably employed as a catalyst for esterification.

The lactone-based polyester polyol, which may further be mixed with an additive and an aid (auxiliary agent) in accordance with needs, may serve as a polyol component for producing polyurethane resin. Examples of the additive and aid include a pigment, a dye, a dispersion stabilizer, a viscositymodifier, a leveling agent, an anti-gelling agent, a photo-stabilizer, an antioxidant, a UV-absorber, a heat resistance enhancer, inorganic fillers and organic fillers, a plasticizer, a lubricant, an antistatic agent, and a reinforcing material.

Each of the reaction steps will next be described. The reaction step performed in the first step is ring-opening addition (esterification) of lactone and can be performed through a known method. Specifically, according to a general procedure, raw materials are fed to a reactor, and the mixture is heated under stirring. Subsequently, the mixture is gradually heated under normal pressure to 280°C, preferably 200°C, whereby ring-opening addition, or esterication, of the cyclic lactone is caused to proceed until conversion of the cyclic lactone reaches a predetermined level. The ratio in feed amount of cyclic lactone to low-molecular-weight polyol and/or polycarboxylic acid is determined in accordance with the number average molecular weight of a target polyester polyol. Specifically, the mole ratio in reaction (cyclic lactone)/(low-molecular-weight polyol and/or polycarboxylic acid) is generally 1/1 to 100/1. When reaction is performed at a high mole ratio, the produced lactone-based polyester polyol has a large molecular weight. However, when the molecular weight increases excessively, viscosity of the polyester polyol increases, thereby making the below-mentioned subsequent treatment (by means of a thin-film evaporator in the second step) difficult. Thus, the mole ratio is generally selected such that the number average molecular weight falls within a range of about 200 to about 100,000 (corresponding to 1 mPa·s to 1,000,000 mPa·s, as reduced to viscosity at about 200°C).

The amount of the catalyst for esterification to be incorporated into the reaction system depends on the type of the catalyst, and is 1 to 1,000 ppm, preferably 5 to 500 ppm, on the basis of the total amount (weight) of the cyclic lactone and the low-molecular-weight polyol and/or polycarboxylic acid, fed to the reaction system. When the catalyst is used in an amount less than 1 ppm, reaction rate is considerably slow, which is problematic from a production viewpoint. On the contrary, when the catalyst is used in an amount in excess of 1,000 ppm, in some cases, amounts of by-products increase and the formed polyester polyol is stained, although reaction rate increases. Needless to say, both cases are not preferred.

In the first step, the point of time at which "conversion of the cyclic lactone reaches a predetermined level" refers to a point of time at which the amounts of low-molecular-weight compounds remaining in the formed lactone-based polyester polyol and the amounts of formed low-molecular-weight compounds reach the below-described levels, respectively.

After completion of the first step, the amount of the formed cyclic lactone dimer is preferably controlled to 1% by weight or less, more preferably 0.5% by weight or less, yet more preferably 0.1% by weight or less. When the formed polyester polyol contains a cyclic lactone dimer formed in an amount exceeding 1% by weight, the amount of the cyclic lactone dimer cannot be satisfactorily reduced in the subsequent second step of removing low-molecular-weight compounds.

On the other hand, the amount of unreacted cyclic lactone remaining after completion of the first step is preferably small. Generally, the aforementioned cyclic lactone dimer is also formed conceivably through back-biting (i.e. , side reaction) of the polymer formed via ring-opening addition of the cyclic lactone compound. In fact, in the case where the amount of remaining cyclic lactone has decreased to several percents or less, the amount of cyclic lactone dimer incorporated into the lactone-based polyester polyol is known to be gradually increased. Thus, in the reaction system employed in practice, decrease in remaining cyclic lactone and increase in cyclic lactone dimer formed in the reaction system must be investigated under various conditions in relation to temperature, catalyst, feed amounts, etc. In the present invention, the cyclic lactone content and the similar substance content are determined through gas-chromatographic (GC) analysis mentioned below.

As described above, ring-opening addition of a cyclic lactone is performed to the greatest possible extent, thereby attaining a predetermined conversion(i.e.,forming a predetermined amount of cyclic lactone dimer).
Thereafter, the second step, which is a step for removal of the low-molecular-weight compounds, is performed. The specific procedure of the second step includes lowering the temperature of the reaction mixture in the case where the second step is performed immediately after the first step; and continuously feeding the reaction mixture to a thin-film evaporator and subjecting to evaporation the reaction mixture in the form of thin film, thereby removing low-molecular-weight compounds from the system, whereby a lactone-based polyester polyol of interest is produced. The characteristic features of the present invention include synthesis of a lactone-based polyester polyol through a conventional method and, subsequently removing the low-molecular-weight compounds by means of a thin-film evaporator in the second step. Conventionally, removal of the low-molecular-weight compounds, particularly, a cyclic lactone dimer, by means of a thin-film evaporator has never been performed.

In the thin-film evaporator to be used in the present invention, a liquid is fed in the form of thin film through conditions of mechanical stirring or naturally falling so as to enhance the heat transfer coefficient, and the thin-film evaporator is employed for effectively evaporating the low-molecular-weight compounds. A conventional vertical-type or lateral-type thin-film evaporator may be employed. With respect to the type of thin-film evaporator, that of the mechanical stirring is preferably employed, since a liquid having relatively high viscosity can be treated without lowering heat transfer coefficient. Examples of the heat medium to be employed include steam and oil, etc. The inside temperature of the outer column of the thin-film evaporator is preferably 80 to 250°C, and more preferably 100 to 245°C. When the inside temperature of the outer column of the thin-film evaporator is lower than 80°C, the lactone-based polyester polyol has increased viscosity, thereby failing to consistently form liquid film, whereas when the inside temperature of the outer column of the thin-film evaporator is higher than 250°C, the lactone-based polyester polyol obtained is stained or thermally decomposed. Needless to say, both cases are not preferred.

Preferably, the reaction mixture forms thin liquid film when spread on a heating surface through conditions of mechanical stirring or naturally falling, quickly allowing the low-molecular-weight compounds to evaporate. From this point, the liquid film advantageously has a small thickness. However, if the liquid film is discontinuously formed on the heat-transfer surface, uncovered portions are formed, the portions causing side reaction due to lacking of uniformity in heating. Therefore, the thickness of the liquid thin film is preferably 10 mm or less, and more preferably 0.1 mm to 2 mm. The mean residence time of the liquid is preferably as short as possible in order to minimize thermal history. The residence time can be calculated from the amount of the retained liquid. However, since the thickness of the liquid film is difficult to determine precisely, precise determination of the actual residence time is difficult. Thus, the residence time expressed by the flow per heat-transfer area preferably falls within a range of 1 × 10⁻⁴ to 6 × 10⁻⁴ g/sec/cm². The pressure is preferably as low as possible, from the viewpoint of vaporization efficiency of the low-molecular-weight compound. However, realizing lower pressure is technically difficult. Thus, the pressure is preferably 10⁻³ to 10 mmHg (0.133 to 1,330 Pa). The temperature of the reaction mixture fed to the thin-film evaporator is 20 to 200°C, and preferably 40 to 160°C.

No particular limitation is imposed on the timing of addition of the aforementioned additives, and these additives can be added to the system in an appropriate step.

### EXAMPLES

The present invention will next be described in detail by way of Examples, which should not be construed as limiting the invention thereto. Unless otherwise specified, "part(s)" and "%" in the Examples denote "part(s) by weight" and "% by weight," respectively.

### Example 1

In a flask equipped with a stirrer, a thermometer, a nitrogen conduit, and a condenser, trimethylolpropane (134 g), ε-caprolactone (1,865 g), and stannous octylate (20 mg) serving as a catalyst were placed. The mixture was allowed to react at 150°C for about 7 hours. The thus-formed lactone-based polyester diol assumed the form of a waxy substance and had a melting point of 46 to 49°C, a cyclic lactone dimer content of 0.2%, a cyclic lactone content of 0.8%, an OH value of 56.2 KOHmg/g, and an acid value of 0.2 KOHmg/g. Thereafter, the temperature of the reactor was lowered to 100°C, and the substance in the reactor was fed to a thin-film evaporator. The thin-film evaporator employed was a rotating thin-film type molecular distillator (MS-300, product of Shibata Scientific Technology, Ltd., which has an outer column having inside diameter of 50 mm and length of 200 mm), and was operated under the following conditions: evaporator inside pressure: 0.25 mmHg (33.3 Pa), outer column temperature: 240°C, and wiper speed: 200 rpm. The substance was continuously fed to the evaporator at a rate of 300 g/hour, which corresponds to 2.7 × 10⁻⁴ g/sec/cm². Thus-obtained lactone-based polyester polyol assumed the form of a waxy substance and had a melting point of 46 to 49°C, a cyclic lactone dimer content of 0.01%, a cyclic lactone content of 0.01%, an OH value of 56.2 KOHmg/g, and an acid value of 0.2 KOHmg/g.

The cyclic lactone (ε-caprolactone) content and the cyclic lactone dimer (ε-caprolactone dimer) content were determined by means of a gas chromatograph (Shimadzu GC-9A, a product of Shimadzu Corporation) on the basis of an absolute calibration curve method.

In a GC chart obtained under the below-described conditions, a peak attributed to the cyclic lactone (ε-caprolactone) and that attributed to the cyclic lactone dimer (ε-caprolactone dimer) were observed at retention times of about 1.463 (min) and about 7.013 (min), respectively.

The specific procedure of the GC analysis will next be described.

### Procedure of analysis:

(1) Precisely weighing a sample (about 2 g)
(2) Dissolving the sample in acetone and adjusting the total volume of the solution to 50 mL by use of a measuring flask
(3) Analyzing the solution through GC (on the basis of the absolute calibration curve method)

### GC analysis conditions:

| | |
|---|---|
| GC Model | Shimadzu GC-9A |
| Packing | 5% Thermon-3000/Chromosorb-W (AW-DMCS) |
| Column | 2.6 mm I.D. × 2.1 m length |
| Column temp. | 210°C |
| Carrier gas | N₂ |
| Column flow | 50 ml/min |
| Injection temp. | 230°C |
| Detector temp. | 230°C |
| Sample amount | 1.0 µl |
| Detector | FID (H₂=1.0 kg/cm², air 1.0 kg/cm²) |
| Sensitivity | Range = 2 |

### Example 2

Placcel 220AL (a product of Daicel Chemical Industries, Ltd., a lactone-basedpolyol polymerized with polyneopentyl adipate serving as an initiator)――having a cyclic lactone dimer content of 0.2%, a cyclic lactone content of 0.5%, an OH value of 56 mgKOH/g, and an acid value of 0.5 mgKOH/g――was heated to 100°C, and the thus-heated polyol was continuously fed to a thin-film evaporator. The thin-film evaporator was a Smith-type thin-film evaporator (a product of Shinko Seisaku-sho, heat-transfer area: 3.1 m², and condenser area: 4.7 m²) and was operated under the following conditions: evaporator inside pressure: 1 mmHg (133 Pa), temperature: 220°C, and wiper speed: 100 rpm. Placcel 220AL maintained at 100°C was continuously fed to the evaporator at a rate of 20 kg/hour, which can be reduced to 1.8 × 10⁻⁴ g/sec/cm². The thus-obtained lactone-based polyester polyol assumed a colorless liquid and had a cyclic lactone dimer content of 0.01%, a cyclic lactone content of 0.01%, an OH value of 56 mgKOH/g, and an acid value of 0.3 mgKOH/g.

### Example 3

In a reactor or flask as employed in Example 1, trimethylolpropane (134 g), ε-caprolactone (1,865 g), and stannous octylate (20 mg) serving as a catalyst were placed. The mixture was allowed to react at 150°C for about 6 hours. The thus-formed lactone-based polyester polyol assumed the form of a waxy substance and had a melting point of 46 to 49°C, a cyclic lactone dimer content of 0.1%, a cyclic lactone content of 2%, an OH value of 56.2 KOHmg/g, and an acid value of 0.2 KOHmg/g. Thereafter, the temperature of the reactor was lowered to 100°C, and the substance in the reactor was fed to a thin-film evaporator. The thin-film evaporator employedwas a vertical thin-film type molecular distillator with a mechanical stirring (a product of Shibata Scientific Technology, Ltd., which has an outer column having inside diameter of 50 mm and length of 200 mm), and was operated under the following conditions: evaporator inside pressure: 0.25 mmHg (33.3 Pa), outer column temperature: 240°C, and wiper speed: 200 rpm. The substance was continuously fed to the evaporator at a rate of 300 g/hour, which can be reduced to 2.7 × 10⁻⁴ g/sec/cm². The thus-obtained lactone-based polyester polyol assumed the form of a waxy substance and had a melting point of 46 to 49°C, a cyclic lactone dimer content of 0.005%, a cyclic lactone content of 0.01%, an OH value of 56.2 KOHmg/g, and an acid value of 0.2 KOHmg/g.

### Example 4

The procedure of Example 1 was repeated, except that the feed rate to the thin-film evaporator was changed to 600 g/hour, to thereby produce a polyester polyol. The feed rate is equivalent to 5.3 × 10⁻⁴ g/sec/cm². The thus-obtained lactone-based polyester polyol assumed the form of a colorless waxy solid substance at ambient temperatures and had a melting point of 46 to 49°C, a cyclic lactone dimer content of 0.02%, a cyclic lactone content of 0.02%, an OH value of 56.2 KOHmg/g, and an acid value of 0.2 KOHmg/g.

### Comparative Examples

The lactone-based polyester polyols produced in the respective first steps of Examples 1 to 3, and the procedure of the respective first steps performed in Examples 1 to 3 are employed as corresponding Comparative Examples. In the case of Example 2, the starting material per se corresponds to a comparative polyester polyol.

### INDUSTRIAL APPLICABILITY

The present invention provides a lactone-based polyester polyol containing low-molecular-weight compounds in a small amount, and provides a process for producing the polyester polyol. By use of the polyester polyol, a high-quality polyurethane resin can be produced.

## Claims

1. A lactone-based polyester polyol **characterized by** having a cyclic lactone content of 0.05% by weight or less.

2. A lactone-based polyester polyol **characterized by** having a cyclic lactone dimer content of 0.05% by weight or less.

3. A lactone-based polyester polyol according to claim 1, which has a cyclic lactone dimer content of 0.01% by weight or less.

4. A process for producing a lactone-based polyester polyol as recited in any of claims 1 to 3, **characterized in that** the process comprises a first step of adding a cyclic lactone, a low-molecular-weight polyol and/or a polycarboxylic acid, and an esterification catalyst to a reaction system and making ring-opening addition or esterification of the cyclic lactone to proceed until conversion of the cyclic lactone reaches a predetermined level; and a second step of continuously feeding the reaction mixture to a thin-film evaporator and subjecting the reaction mixture to evaporate in the form of thin film, thereby removing a low-molecular-weight compound from the system.

5. A process for producing a lactone-based polyester polyol according to claim 4, wherein the low-molecular-weight compound mainly comprises any of a cyclic lactone, a dimer of a cyclic lactone, or a malodorous substance.
